# EUROPEAN PATENT APPLICATION

(11) **EP 3 805 716 A1**
(43) Date of publication of application: **14.04.2021**
(21) Application number: 19202800.9
(22) Date of filing: 11.10.2019
(51) Int. Cl.: G01J 3/28, G01J 3/433, G02B 21/06, G01J 3/10, G01J 1/42

(54) **LIGHT DETECTION CIRCUIT, MICROSCOPE AND METHOD FOR HYPERSPECTRAL IMAGING**

(71) Applicant: Leica Instruments (Singapore) Pte. Ltd., 608924 Singapore (SG)
(72) Inventor: HANDLOSER, Matthias, 88131 Bodolz/Lindau (DE); BREUER, Maximilian, 88138 Sigmarszell (DE)
(74) Representative: 2SPL Patentanwälte PartG mbB

(57) **Abstract**

A light detection circuit for hyperspectral imaging is configured to generate a first reference signal having a first frequency and a second reference signal having a second frequency and to emit pulsed light of a first wavelength at time instances given by the first reference signal and a second wavelength at time instances given by the second reference signal. The circuit id further configured to detect the first wavelength at time instances given by the first reference signal and the second wavelength at time instances given by the second reference signal.

## Description

### Technical field

Examples relate to microscopes with spectrally resolved detection.

### Background

In order to observe different characteristics of certain compounds and molecules thereof, different types of microscopes using light sources of different wavelengths (multispectral imaging) may be used to inspect different characteristics of the specimen by exciting the molecules of interest, for example, to vibration or fluorescence. Since light of different wavelengths is necessary for different characterization methods, it might be necessary to use different types of microscope setups using a light source of a particular wavelength and a corresponding detector or sensor. Using multiple types of microscope setups, each using a different light source and detector, may lead to high costs. Subsequently using different setups does further not allow to investigate dynamic processes.

### Summary

Hence, there is a need for an improved concept for microscopy using light of multiple wavelengths
This demand is addressed by the subject-matter of the independent claims. Further useful embodiments are addressed by the dependent claims.

An example relates to a light detection circuit for hyperspectral imaging. The light detection circuit generates a first reference signal having a first frequency and a second reference signal having a second frequency. Further, the light detection circuit emits pulsed light of a first wavelength at time instances given by the first reference signal and a second wave-length at time instances given by the second reference signal. Furthermore, the light detection circuit detects the first wavelength at time instances given by the first reference signal and the second wavelength at time instances given by the second reference signal.

A first reference signal has a first reference frequency. The first reference frequency corresponds to a first wavelength of a first emitted pulsed light in that the emission of light of the first wavelength is triggered by the first reference signal at the first reference frequency. By use of the first reference frequency, the first emitted pulsed light having the first wavelength may be detected since detection of light is synchronized with emission. A second reference signal has a second reference frequency. The second reference frequency corresponds to a second wavelength of a second emitted pulsed light alike. In this way, at least two emitted pulsed light signals having different wavelengths may be detected separately with the same light detection circuit.

In another example, the light detection circuit further comprises a detector for detecting the first and second wavelength. Additionally, the light detection circuit comprises a lock-in amplifier receiving the first reference signal and the second reference signal. The lock-in amplifier then amplifies the signal of the detector.

The first and the second emitted pulsed light signals may be detected by the detector. The detector may forward a first detection signal and a second detection signal to the lock-in amplifier. The lock-in amplifier may amplify the forwarded first detection signal by use of the first reference frequency of the first reference signal corresponding to the first emitted pulsed light having the first wavelength. Further, the lock-in amplifier may amplify the forwarded second detection signal using the second reference frequency of the second reference signal corresponding to the second emitted pulsed light having the second wavelength. By using a different reference frequency for each different wavelength, light of multiple wavelengths may be detected with the same detector since the lock-in amplifier is sensitive to different wavelength, which is achieved by locking into the corresponding reference signal. Locking into the different frequencies may also allow to alternatingly use different wavelength at a relatively high frequency, which may in turn allow to also observe dynamic processes.

In a further example, the first reference signal and the second reference signal are pulse width modulated signals with different frequencies.

In an additional example, a duration of emitting the first wavelength is given by the duty cycle of the first reference signal, and a duration of emitting the second wavelength is given by the duty cycle of the second reference signal. Each different pulse width modulation reference frequency being assigned to a different wavelength may have a different duty cycle. This means that the duration of emitting a light signal of each wavelength is different. Using different duty cycles and, hence, different lengths of an individual pulse of different wavelengths may serve to compensate for different sensitivities of the sensor to the different wavelengths or to compensate other sensitivity variations between different wavelengths.

In an optional example, the lock-in amplifier comprises at least a first channel associated to the first reference signal and a second channel associated to the second reference signal. The lock-in amplifier may provide at least two channels for each of the at least two different pulse width modulation reference frequencies each being assigned to a certain wavelength of interest. In this way, light signals of different wavelengths being assigned to a certain pulse width modulation frequency may be detected sequentially in a short time by switching between the channels. In short, each channel may correspond to a different wavelength of interest.

As an example, the detector comprises at least one of a CCD camera, a CMOS image sensor, and a Photo Diode sensor.

As another example, the light detection circuit further comprises a light source. This light source comprises at least one of a Light Emitting Diode, a Light Emitting Diode array, a Laser Diode, and a Laser Diode array.

As a further example, the light detection circuit further comprises an acousto optic tunable filter to filter light emitted from the light source and to make the spectrum of the light of a particular frequency narrower.

An example relates to a microscope, which comprises a light detection circuit as described above. The above described light detection circuit may provide a microscope with a light source of a plurality of different wavelengths and a corresponding detector. In this way, several different types of microscopy methods and spectral imaging algorithms may be performed by a single microscope, which may allow for a time-resolved analysis of multiple properties of a specimen.

In another example, the microscope outputs a first image of a specimen determined at a time instance given by the first reference signal together with information on the first wave-length. The microscope further outputs a second image of the specimen determined at a time instance given by the second reference signal together with information on the second wave-length. The output may enable external circuitry or computational units to perform sophisticated image analysis methods on the images which are specific for each wavelength.

The microscope, making use of the light detection circuit, may obtain at least two images using pulsed light of at least two wavelengths of the same object or specimen. This enables an inspection of a certain specimen by use of different wavelengths/excitation methods.

Another example relates to a method for hyperspectral imaging. The method comprises generating a first reference signal having a first frequency and a second reference signal having a second frequency. The method further comprises emitting pulsed light of a first wave-length at time instances given by the first reference signal and a second wavelength at time instances given by the second reference signal. Furthermore, the method comprises detecting the first wavelength at time instances given by the first reference signal and the second wavelength at time instances given by the second reference signal.

According to another example, the method further comprises outputting a first image of a specimen determined at a time instance given by the first reference signal together with information on the first wavelength. Additionally, the method comprises outputting a second image of the specimen determined at a time instance given by the second reference signal together with information on the second wavelength.

According to an additional example, the method further comprises analyzing the first image using a first spectral imaging algorithm and analyzing the second image using a second spectral imaging algorithm.

An example relates to an apparatus for analyzing images of a specimen. The apparatus receives a first image of a specimen determined at a time instance given by a first reference signal together with information on the first wavelength. Further, the apparatus receives a second image of the specimen determined at a time instance given by a second reference signal together with information on the second wavelength. Furthermore, the apparatus analyzes the first image using a first spectral imaging algorithm and the second image using a second spectral imaging algorithm. By analyzing the images obtained with different wavelengths by use of a spectral imaging algorithm executed on a dedicated apparatus, processor or computer, computationally complex algorithms may be used which may not be executable on embedded hardware and which result with a more precise result.

Another example relates to a computer program having a program code for, when executed on a processor, causing the execution of a method.

### Short description of the Figures

Some examples of apparatuses and/or methods will be described in the following by way of example only, and with reference to the accompanying figures, in which
Fig. 1 illustrates a block diagram showing a light detection circuit for hyperspectral imaging.
Fig. 2 shows a flowchart describing a method for hyperspectral imaging.
Fig. 3 shows a schematic illustration of a system comprising a microscope and a computer system.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

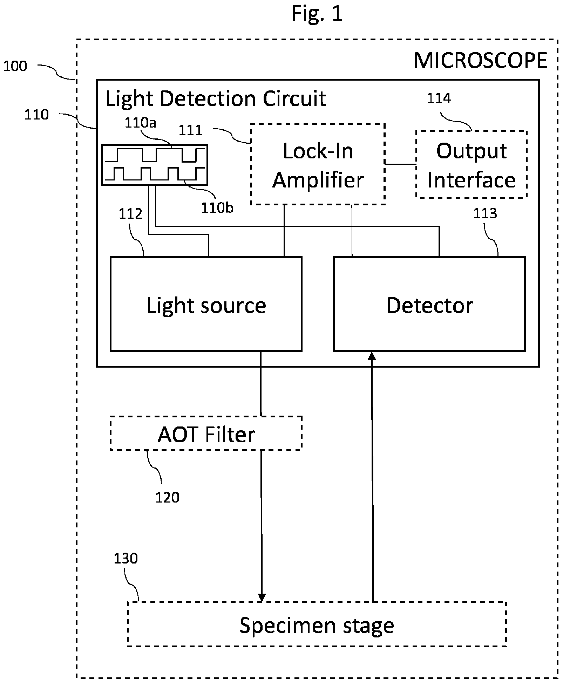

Fig. 1 shows a conceptional block diagram of an example relating of a light detection circuit 110 for hyperspectral imaging. The light detection circuit generates a first reference signal 110a having a first frequency and a second reference signal 110b having a second frequency. Further, the light detection circuit emits pulsed light of a first wavelength at time instances given by the first reference signal 110a and a second wavelength at time instances given by the second reference signal 110b. Furthermore, the light detection circuit detects the first wavelength at time instances given by the first reference signal 110a and the second wavelength at time instances given by the second reference signal 110b. The light detection circuit 110 further comprises a detector 113 for detecting the first and second wavelength. Additionally, the light detection circuit 110 comprises a lock-in amplifier 111 receiving the first reference signal 110a and the second reference signal 110b. The lock-in amplifier 111 then amplifies the signal of the detector 113.

In other words, a first reference signal 110a has a first reference frequency. This reference frequency may correspond to the first wavelength of a first emitted pulsed light. By use of the first reference frequency to trigger or control the detector, the first emitted pulsed light having the first wavelength may be detected. The second reference signal 110b may have a second reference frequency. A second reference frequency may correspond to a second wavelength of a second emitted pulsed light. By use of the second reference frequency to trigger or control the detector, the second emitted pulsed light having the second wavelength may be detected. In this way, at least two emitted pulsed light signals having different wavelengths may be detected with the same light detection circuit 110.

The first and the second emitted pulsed light signals may be detected by the detector 110. The detector 110 may forward a first detection signal and a second detection signal to the lock-in amplifier 111. The lock-in amplifier 111 may amplify the forwarded first detection signal controlled by the first reference frequency of the first reference signal 110a. Further, the lock-in amplifier 111 may amplify a forwarded second detection signal controlled by the second reference frequency of the second reference signal 110b corresponding to the second emitted pulsed light having the second wavelength. By assigning each different wavelength to a different reference frequency, light of multiple wavelengths may be detected with the same detector 113 and alternatingly. On a bigger timescale of, for example, seconds, the multiple wavelength may be recorded simultaneously.

In an example, the first reference signal 110a and the second reference signal 110b are pulse width modulated signals with different frequencies.

Assigning a different pulse width modulation reference frequency to each wavelength of interest enables detecting all wavelengths of interest sequentially by a sequential selection of the pulse width modulation reference frequencies of the assigned desired wavelength and switching between them in a short time interval.

Each different pulse width modulation reference frequency being assigned to a different wavelength has a different duty cycle. This means that the duration of emitting a light signal of each wavelength is different.

The lock-in amplifier 111 may provide at least two channels for each of the at least two different pulse width modulation reference frequencies each being assigned to emitted pulsed light of a certain wavelength of interest. In this way, light signals of different wavelengths being assigned to a certain pulse width modulation frequency may be detected sequentially in a short time by switching between the channels. In short, each channel of the lock-in amplifier 111 may correspond to a different wavelength of interest.

In some examples, the detector 113 of the light detection circuit 110 may comprise at least one of a CCD camera, a CMOS image sensor, a Photo Diode sensor or a Photo Multiplier Tube for detecting light signals.

These common cameras and detectors may be tuned or modified by a lock-in amplifier in order to output amplified light detection signals of many different wavelengths by use of different reference frequencies, each being assigned to a certain wavelength. Thus, there is no need of optical filters needed like in traditional microscopes, causing noisy signals.

In further examples, the light detection circuit 110 may further comprise a light source 112. This light source may comprise at least one of a Light Emitting Diode, a Light Emitting Diode array, a Laser Diode, a Laser Diode array.

Also, laser sources of different types may be used, like gas lasers, chemical lasers, dye lasers, metal-vapor lasers, solid-state lasers, semiconductor lasers, etc.

As a further example, the light detection circuit may further comprise an acousto optic tunable filter to filter light emitted from the light source.

In case of using, for example, a white light laser emitting light of a smooth spectral continuum, an acousto optic tunable filter may be a valuable tool. Incident polychromatic (white) light is selectively diffracted in an anisotropic medium (e.g. in a crystal lattice). The acousto optic tunable (AOT) filter may essentially comprise an ultra-sonic source attached to a birefringent piezoelectric crystal. The sound waves generate a phase-modulated (periodic) lattice in the crystal. If the so-called Bragg equation is fulfilled for a certain wavelength of the incident light, it is diffracted. By tuning the radio frequency (RF) sound source, different wavelength ranges may be diffracted. Such an instrument provides light that is sufficiently intense and focusable like a common laser beam - which is the requirement for diffraction-limited illumination. It allows continuous tuning of the color from blue to red through the spectrum. Further, it provides some additional benefits, which are caused by the pulsed energy emission. It is inherently a source for single photon based fluorescence lifetime imaging. And it allows suppression of the excitation light in the detection channel by glass-free electronic emission filtering.

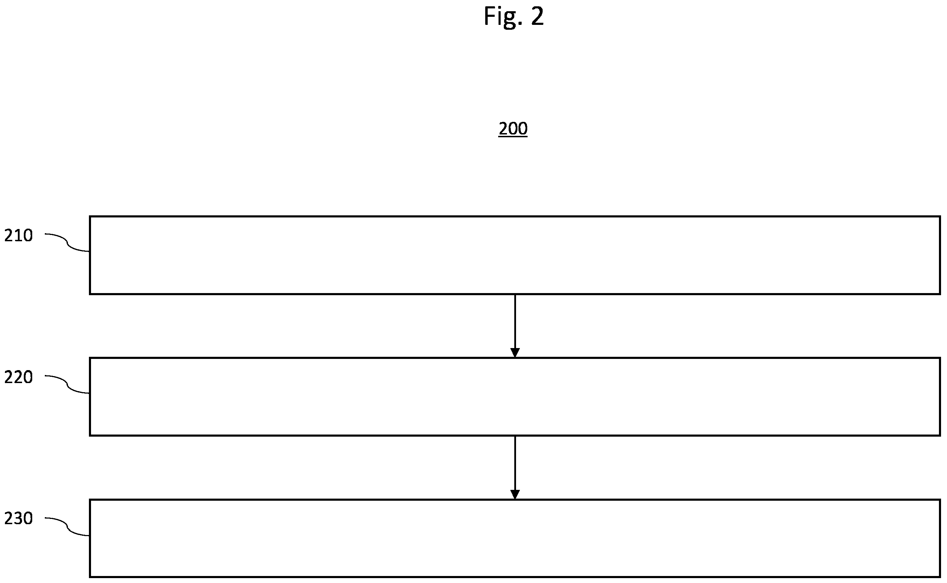

In order to summarize the above aspects on hyperspectral imaging in terms of a process, Fig. 2 further illustrates a flowchart of a method 200 for hyperspectral imaging.

Fig. 2 shows an example relating to a method for hyperspectral imaging. It comprises generating 210 a first reference signal 110a having a first frequency and a second reference signal 110b having a second frequency. The method further comprises emitting 220 pulsed light of a first wavelength at time instances given by the first reference signal 110a and a second wavelength at time instances given by the second reference signal 110b. Furthermore, the method comprises detecting 230 the first wavelength at time instances given by the first reference signal 110a and the second wavelength at time instances given by the second reference signal 110b.

In other words, the previously described aspects relate to a spectrally resolved detection of various samples. Embodiments apply to the entire imaging process, from the generation of the desired signal to the detection. Conventional detectors and amplifying electronics as well as pulsed excitation of different wavelengths may be used in connection with all kinds of imaging hardware (microscopes). The aim of the embodiments is true color correlation microscopy, e.g. to determine the concentration of active substances in pharmaceuticals. All kinds of light-matter interactions may be used (e.g. Raman, fluorescence, electrofluorescence, etc.).

Systems may be equipped with a pulse width modulated light source, which may be based on pulsed colored LEDs/LED arrays or broadband laser excitation. In the case of LEDs, both multicolor LEDs and single-color LEDs may be used. Any laser excitation might be filtered via an acousto-optic tunable filter (AOTF) to obtain the desired spectrally selectable excitation. In all cases, a fixed frequency of the pulse width modulation (e.g. 30kHz red, 50kHz blue) can be assigned to the respective excitation color. In some systems, the detector is coupled with a lock-in amplifier. Any reference frequency for the respective color is fed directly from the light source into the lock-in amplifier. This multi-channel amplifier then amplifies the color of the signals in the assigned frequency band. Any known imaging system may be considered, especially microscopes.

A further example relates to a microscope, which comprises a light detection circuit as described above. A microscope may comprise more than one light source, like for example one or more different lasers in addition to an LED-array. Using such a combination of switchable light sources in one microscope may enable several common microscopy methods in one microscope. There may not only be a traditional optical microscope. Additionally, this exemplary microscope may comprise light sources emitting light of wavelengths which may be used for fluorescence microscopy, dark field microscopy, dispersion staining, ultraviolet microscopy, infrared microscopy and Raman microscopy.

The above described light detection circuit may provide a microscope with light of a plurality of different wavelengths and a corresponding detector. In this way, several different types of microscopy methods may be included in one microscope.

In another example, the microscope outputs a first image of a specimen determined at a time instance given by the first reference signal 110a together with information on the first wave-length. The microscope further outputs a second image of the specimen determined at a time instance given by the second reference signal 110b together with information on the second wave-length.

The microscope, making use of the light detection circuit, may provide at least two images of the same object or specimen, whereby each of the at least two images are taken by use of different wavelengths. This enables an inspection of a certain specimen by use of different wavelengths/excitation methods for different microscopy methods.

The previously named microscopy methods may be used for analysis on chemical compounds, for example in the pharmaceutical field or any other types of chemicals where, for example, the determination of a concentration of a certain compound in a sample or specimen.

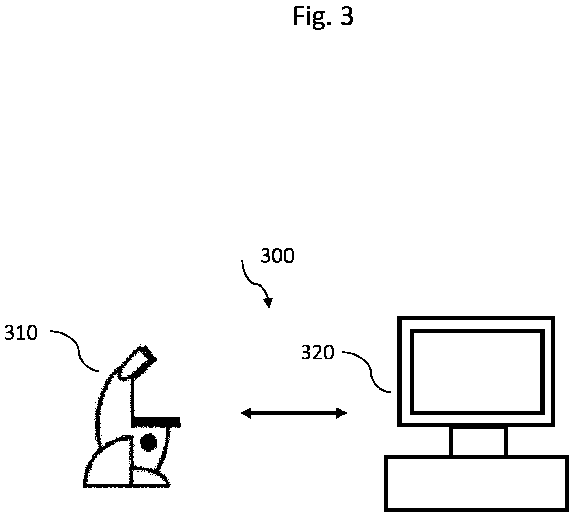

In other words, some embodiments relate to a microscope comprising a system as described in connection with one or more of the Figs. 1 to 2. Alternatively, a microscope may be part of or connected to a system as described in connection with one or more of the Figs. 1 to 2. Fig. 3 shows a schematic illustration of a system 300 configured to perform a method described herein. The system 300 comprises a microscope 310 and a computer system 320. The microscope 310 is configured to take images and is connected to the computer system 320. The computer system 320 is configured to execute at least a part of a method described herein. The computer system 320 may be configured to execute a machine learning algorithm. The computer system 320 and microscope 310 may be separate entities but can also be integrated together in one common housing. The computer system 320 may be part of a central processing system of the microscope 310 and/or the computer system 320 may be part of a subcomponent of the microscope 310, such as a sensor, an actor, a camera or an illumination unit, etc. of the microscope 310.

The computer system 320 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 320 may comprise any circuit or combination of circuits. In one embodiment, the computer system 320 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 320 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 320 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 320 may also include a display device, one or more speakers, and a keyboard and/or controller, which can include a mouse, trackball, touch screen, voice-recognition device, or any other device that permits a system user to input information into and receive information from the computer system 320.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of reference Signs

- 100: Microscope
- 110: Light Detection Circuit
- 110a: First reference signal
- 110b: Second reference signal
- 111: Lock-In Amplifier
- 112: Light Source
- 113: Detector
- 120: Acousto Optic Tunable Filter
- 130: Specimen Stage

- 200: Method for hyperspectral imaging
- 210: Generating a first and a second reference signal 110b
- 220: Emitting pulsed light of a first and a second wavelength
- 230: Detecting the first and the second wavelength

- 300: Microscope System
- 310: Mircoscope
- 320: Computer

## Claims

1. A light detection circuit (110) for hyperspectral imaging, configured to:
generate a first reference signal 110a having a first frequency and a second reference signal 110b having a second frequency;
emit pulsed light of a first wavelength at time instances given by the first reference signal 110a and a second wavelength at time instances given by the second reference signal 110b; and
detect the first wavelength at time instances given by the first reference signal 110a and the second wavelength at time instances given by the second reference signal 110b.

2. The light detection circuit (110) according to claim 1, further comprising
a detector for detecting the first and second wavelength; and
a lock-in amplifier receiving the first reference signal 110a and the second reference signal 110b, the lock-in amplifier being configured to amplify the signal of the detector.

3. The light detection circuit (110) according to claims 1 or 2, wherein the first reference signal 110a and the second reference signal 110b are pulse width modulated signals with different frequencies.

4. The light detection circuit (110) according to claim 3, wherein a duration of emitting the first wavelength is given by the duty cycle of the first reference signal 110a; and
a duration of emitting the second wavelength is given by the duty cycle of the second reference signal 110b.

5. The light detection circuit (110) according to one of claims 2 to 4, wherein the lock-in amplifier (111) comprises at least a first channel associated to the first reference signal 110a and a second channel associated to the second reference signal 110b.

6. The light detection circuit (110) according to one of claims 2 to 5, wherein the detector comprises at least one of a CCD camera, a CMOS image sensor, and a Photo Diode sensor.

7. The light detection circuit (110) according to one of claims 1 to 6, further comprising a light source, the light source comprising at least one of a Laser, a Light Emitting Diode, a Light Emitting Diode array, a Laser Diode, and a Laser Diode array.

8. The light detection circuit (110) according to claim 7, further comprising an acousto optic tunable filter configured to filer light emitted from the light source.

9. A microscope (100), comprising:
a light detection circuit (110) according to one of claims 1 to 8.

10. The microscope of claim 9, the microscope being configured to output a first image of a specimen determined at a time instance given by the first reference signal 110a together with information on the first wavelength; and
output a second image of the specimen determined at a time instance given by the second reference signal 110b together with information on the second wavelength.

11. A method (200) for hyperspectral imaging, comprising:
generating a first reference signal 110a having a first frequency and a second reference signal 110b having a second frequency;
emitting pulsed light of a first wavelength at time instances given by the first reference signal 110a and a second wavelength at time instances given by the second reference signal 110b; and
detecting the first wavelength at time instances given by the first reference signal 110a and the second wavelength at time instances given by the second reference signal 110b.

12. The method according to claim 11, further comprising:
outputting a first image of a specimen determined at a time instance given by the first reference signal 110a together with information on the first wavelength; and
outputting a second image of the specimen determined at a time instance given by the second reference signal 110b together with information on the second wavelength.

13. The method according to claim 12, further comprising:
analyzing the first image using a first spectral imaging algorithm; and
analyzing the second image using a second spectral imaging algorithm.

14. An apparatus for analyzing images of a specimen, configured to:
receive a first image of a specimen determined at a time instance given by a first reference signal 110a together with information on the first wavelength;
receive a second image of the specimen determined at a time instance given by a second reference signal 110b together with information on the second wavelength;
analyze the first image using a first spectral imaging algorithm; and
analyze the second image using a second spectral imaging algorithm.

15. A computer program having a program code for, when executed on a processor, causing the execution of a method according to one of claims 10 to 14.
